# EUROPÄISCHE PATENTSCHRIFT

(11) **EP 3 625 639 B1**
(45) Veröffentlichungstag und Bekanntmachung des Hinweises auf die Patenterteilung: **21.07.2021**
(21) Anmeldenummer: 18723555.1
(22) Anmeldetag: 17.05.2018
(51) Int. Cl.: G05D 11/13, B29B 7/16, B29B 7/24, B29B 7/28

(54) **VERFAHREN UND MISCHANLAGE ZUR BATCHBASIERTEN FERTIGUNG EINES FLIESSFÄHIGEN BESCHICHTUNGSMATERIALS**
METHOD AND MIXING SYSTEM FOR BATCH-BASED PRODUCTION OF A FLUID COATING MATERIAL
PROCÉDÉ ET MÉLANGEUR POUR LA PRÉPARATION EN LOTS D'UN MATÉRIAU DE REVÊTEMENT FLUIDE

(30) Priorität: 19.05.2017 EP 17171969
(43) Veröffentlichungstag der Anmeldung: 25.03.2020
(73) Patentinhaber: BASF Coatings GmbH, 48165 Münster (DE)
(72) Erfinder: DARMSTAEDTER, Patrick Peter, 48165 M nster (DE); BERG, Jan, 48165 M nster (DE); FOUILLET, Jeremy, 48165 M nster (DE)
(74) Vertreter: BASF IP Association
(86) Internationale Anmeldenummer: PCT/EP2018/062900
(87) Internationale Veröffentlichungsnummer: WO 2018/211011

(56) Entgegenhaltungen:
- WO-A1-2009/143348
- DE-A1- 1 962 864
- DE-T2- 69 910 992
- US-A1- 2003 004 229

## Beschreibung

Die Erfindung betrifft ein Verfahren zur batchbasierten Fertigung eines fließfähigen Beschichtungsmaterials, insbesondere wasserbasierten oder lösungsmittelhaltigen Lacks, aus einer Mehrzahl von Komponenten. Die Erfindung betrifft ferner eine Mischanlage zum batchbasierten Fertigen eines fließfähigen Beschichtungsmaterials, insbesondere wasserbasierten oder lösungsmittelhaltigen Lacks, aus einer Mehrzahl von Komponenten.

Verfahren und Mischanlagen der vorbezeichneten Art sind allgemein bekannt, siehe zum Beispiel DE 699 10 992 T2. Sie enthalten üblicherweise einen oder mehrere Mischbehälter, in denen die Komponenten des herzustellenden Beschichtungsmaterials nach vorheriger Einwaage zu einem Batch oder einer Charge eines Produktes zusammengesetzt werden. Dabei kann eine solche Charge des herzustellenden Beschichtungsmaterials aus mehreren Batchen hergestellt werden, die abschließend miteinander vermischt werden. Die Zusammensetzung der einzelnen Batche einer Charge kann aber infolge der Spezifikationsvorgaben variieren.

Da die Einwaage der flüssigen oder auch schüttfähigen Komponenten nur mit begrenzter Genauigkeit erfolgen kann, und bisweilen auch schon geringe Abweichungen hinsichtlich des Anteils der Einzelkomponenten an der gesamten Mischung einen Einfluss auf die Eigenschaften des herzustellenden Beschichtungsmaterials oder des spezifikationsrelevanten anteiligen Rohstoffgemisches der Charge haben, ist eine Kontrolle der Zusammensetzung der Komponenten während des Mischprozesses und/oder danach unausweichlich. Im Stand der Technik wird dies allgemein dahingehend gelöst, dass nach dem Einwiegen aller Komponenten für das herzustellende Beschichtungsmaterial eines Batches eine homogene Mischung mit vorläufiger Zusammensetzung hergestellt wird. Von dieser Mischung wird dann nach Unterbrechung des Mischprozesses eine Probe entnommen, die gewissermaßen offline auf ihre Anfallqualität, d.h. auf eine oder mehrere Produkteigenschaften, hin untersucht wird. Ein solcher Prozess ist beispielsweise in WO 2013/081812 A1 beschrieben. Dies umfasst das Ermitteln eines Ist-Zustandes der Mischung und einen Vergleich dieses Ist-Zustandes mit einem vordefinierten Soll-Zustand. Abweichungen werden durch nachträgliches Zugeben einer oder mehrerer Komponenten in die homogene Mischung mit vorläufiger Zusammensetzung vorgenommen. Das Angleichen zwischen Soll-Zustand und Ist-Zustand wird erforderlichenfalls mittels Wiederholung der Probennahme sichergestellt.

Ein Nachteil, der bei dieser Vorgehensweise beobachtet wird, ist zum einen der notwendige Zeitaufwand, der durch die Probennahme und Auswertung, sowie das Unterbrechen des Mischprozesses entsteht. Ein weiterer hiermit verknüpfter Nachteil wird darin gesehen, dass der Prozessmischbehälter, in dem die Einwaage erfolgt, und mit ihm das Einwaage-Equipment für die gesamte Zeit bis zum Abfluss der Feinjustierung der Komponenteneinwaage belegt ist und nicht für andere Anwendungen zur Verfügung steht.

Der Erfindung lag folglich die Aufgabe zugrunde, ein Verfahren und eine Mischanlage der eingangs bezeichneten Art dahingehend zu verbessern, dass die vorstehend beschriebenen Nachteile möglichst weitgehend überwunden werden. Insbesondere lag der Erfindung die Aufgabe zugrunde, bei einem Verfahren und einer Mischanlage der eingangs bezeichneten Art einen zeiteffizienteren Betrieb zu gewährleisten.

Die Erfindung löst die ihr zugrundeliegende Aufgabe in einem ersten Aspekt, indem sie ein Verfahren mit den Merkmalen von Anspruch 1 vorschlägt. Die Erfindung schlägt ein Verfahren zur chargenbasierten Fertigung eines fließfähigen Beschichtungsmaterials, insbesondere wasserbasierten oder lösungsmittelhaltigen Lacks, aus einer Mehrzahl von Komponenten vor, welches die Schritte umfasst:
- Einspeisen von Komponenten für eine Charge in einen Prozessmischbehälter, im Wesentlichen in einer jeweils für die Charge vorbestimmten Menge,
- Vermischen der Komponenten in dem Prozessmischbehälter zu einer, vorzugsweise homogenen, Mischung mit vorläufiger Zusammensetzung,
- Überführen wenigstens eines Teils der Mischung mit vorläufiger Zusammensetzung von dem Prozessmischbehälter in einen Empfangsbehälter,
- Ermitteln eines Ist-Zustandes der Mischung mit vorläufiger Zusammensetzung während des Überführens in den Empfangsbehälter,
- Bestimmen einer Abweichung des Ist-Zustandes der Mischung mit vorläufiger Zusammensetzung von einem vordefinierten Soll-Zustand,
- Ermitteln einer zum Erreichen des Soll-Zustands notwendigen Justiermenge für die Komponenten, und
- Nachspeisen der Justiermenge der Komponenten zu der Mischung mit vorläufiger Zusammensetzung, während die Mischung mit vorläufiger Zusammensetzung bereits von dem Prozessmischbehälter in den Empfangsbehälter überführt wird.

In einer ersten bevorzugten Alternative werden sämtliche Komponenten des Batches in den Prozessmischbehälter eingespeist.

In einer zweiten bevorzugten Alternative werden nur einige Komponenten in den Prozessmischbehälter eingespeist, nämlich insbesondere diejenigen Komponenten, welche für das herzustellende Beschichtungsmaterial spezifikationsrelevant sind, während die übrigen Komponenten für das Batch in den Empfangsbehälter eingespeist werden. Spezifikationsrelevante Komponenten sind beispielsweise diejienigen Komponenten, die den Farbton des Beschichtungsmaterials definieren, insbesondere Pigmentpasten.

Die Erfindung beruht auf der Erkenntnis, dass ein signifikantes Einsparpotential hinsichtlich der benötigten Zeit zur Herstellung der Charge des Beschichtungsmaterials in einem unterbrechungsfreien Fertigungsvorgang zwischen Einwaage und Bereitstellen des Beschichtungsmaterials im Empfangsbehälter liegt. Die Erfindung setzt hier an, indem sie vorsieht, dass die vorläufige Mischung, quasi online bereits während des Überführens von dem Prozessmischbehälter in den Empfangsbehälter auf eine oder mehrere Produkteigenschaften hin überprüft wird, indem während der Überprüfung der Ist-Zustand der vorläufigen Mischung bestimmt wird, und mit einem vordefinierten Soll-Zustand der vorläufigen Mischung verglichen wird. Dadurch, dass auch das Nachspeisen der noch fehlenden Komponenten zum Angleich des Ist-Zustandes an den Soll-Zustand ebenfalls während des Überführens der vorläufigen Mischung vom Prozessmischbehälter in den Empfangsbehälter erfolgt, kann der Erfolg der Nachspeisung direkt "online" überprüft werden. Hierdurch sinkt der Zeitbedarf für die Herstellung einer Charge des Beschichtungsmaterials, da man den Mischvorgang nicht mehr zur Probennahme stoppen muss.

Die Produktqualität des herzustellenden Beschichtungsmaterials steigt potentiell, da sowohl die ursprüngliche Einwaage zur Herstellung der vorläufigen Mischung als die Nachspeisung für die Feineinstellung von der vorläufigen Mischung hin zur Komposition für das herzustellende Beschichtungsmaterial mit Rohstoffen aus ein und derselben Edukt-Rohstoffcharge jeweils vorgenommen werden kann.

Das erfindungsgemäße Verfahren wird vorteilhaft weitergebildet, indem es die Schritte umfasst:
- Erhalt des Beschichtungsmaterials mittels fortgesetztem Homogenisieren der Mischung mit vorläufiger Zusammensetzung samt der Justiermenge in dem Empfangsbehälter, und
- Abfüllen des Beschichtungsmaterials aus dem Empfangsbehälter.

In einer weiteren bevorzugten Ausführungsform des Verfahrens beginnt der Schritt des Überführens der Mischung mit vorläufiger Zusammensetzung, nachdem diese für eine vorbestimmte Zeit im Prozessmischbehälter gemischt worden ist und homogen vorliegt. Vorzugsweise erfolgt die Mischung im Prozessmischbehälter so lange, bis bei optischer Inspektion eine gleichmäßige Farbe und Konsistenz der Mischung mit vorläufiger Zusammensetzung vorliegt.

In einer besonders bevorzugten Ausgestaltung des Verfahrens durchläuft die Mischung mit vorläufiger Zusammensetzung zur Überführung in den Empfangsbehälter eine zwischen dem Prozessmischbehälter und dem Empfangsbehälter angeordnete Messeinrichtung, in welcher der Ist-Zustand der Mischung mit vorläufiger Zusammensetzung mittels einer oder mehrerer Messgeräte ermittelt wird.

Vorzugsweise wird der Ist-Zustand mittels Messung eines oder mehrerer charakteristischer Parameter für die Mischung mit vorläufiger Zusammensetzung ermittelt, wobei der Soll-Zustand mittels vordefinierter Zielwerte der charakteristischen Parameter für die Mischung mit vorläufiger Zusammensetzung definiert ist. Die charakteristischen Parameter sind vorzugsweise ausgewählt aus der Liste bestehend aus: Viskosität, pH-Wert, Farbton, Transparenz, Dichte und/oder Partikelgröße.

Die Leitfähigkeit kann beispielsweise mittels eines oder mehrerer konduktiver und/oder induktiver Leitfähigkeitssensoren bestimmt werden. Die Transparenz kann beispielsweise mittels eines oder mehrerer Refraktometer und/oder Transmissionssensoren bestimmt werden. Die Viskosität kann beispielsweise mittels eines Coriolis-Massendurchflussmessgeräts oder sonstiger Viskosimeter bestimmt werden. Auch Dichte und Massedurchfluss können mittels eines oder mehrerer Coriolis-Massendurchflussmessgeräte bestimmt werden. Der Farbton kann mittels optischer Messaufnehmer bestimmt werden. Die Partikelgröße kann beispielsweise mittels eines Laserbeugungs-Messsystems bestimmt werden.

Besonders bevorzugt erfolgt das Ermitteln des Ist-Zustandes kontinuierlich während des Überführens in dem Empfangsbehälter.

In einer ersten bevorzugten Alternative des erfindungsgemäßen Verfahrens erfolgt das Nachspeisen der Komponenten mittels Einfüllen direkt in den Prozessmischbehälter. Hierdurch können sowohl der Prozessmischbehälter als auch der Empfangsbehälter dazu genutzt werden, nachgespeistes Material unterzumischen. Ferner wird die Auswirkung der Nachspeisung unmittelbar in der Überprüfung des Ist-Zustandes während der Überführung in den Empfangsbehälter sichtbar. Dazu erfolgt bspw. für den Farbton vorzugsweise eine Mischkalkulation der Produkteigenschaften in der Auswerteeinheit, die die Materialaufteilung zwischen dem Prozessmischbehälter und dem Empfangsmischbehälter berücksichtigt, d.h. die Menge an Material, das bereits vor dem Schritt des Nachspeisens in den Empfangsbehälter überführt worden ist. So werden die Eigenschaften des Farbtons für ein Beschichtungsmaterial bei der Überführung des verbleibenden Chargenanteils aus dem Prozessmischer auf die Gesamtcharge adaptiert.

Alternativ oder zusätzlich erfolgt vorzugsweise ein Nachspeisen der Komponenten mittels Einfüllen direkt in den Empfangsbehälter. Dies ermöglicht eine weitere Zeitersparnis und wird insbesondere bevorzugt bei der Herstellung von Beschichtungsmaterialien, die u.U. nicht farbmetrisch korrigiert werden müssen. Besonders bevorzugt erfolgt das Nachspeisen der Komponenten direkt in den Empfangsbehälter mit solchen Komponenten, deren Anteil an der vorläufigen Mischung die Viskosität und/oder den pH-Wert beeinflusst.

Alternativ oder zusätzlich erfolgt vorzugsweise ein Nachspeisen der Komponenten mittels Einfüllen in eine Fluidleitung, die mit dem Prozessmischbecher einerseits und dem Empfangsbehälter andererseits zum Überführen der Mischung mit vorläufiger Zusammensetzung von dem Prozessmischbehälter in den Empfangsmischbehälter fluidleitend verbunden ist, an einer Stelle stromaufwärts der einen oder mehreren Messeinrichtungen, welche den Ist-Zustand der Mischung mit vorläufiger Zusammensetzung erfassen.

Das Verfahren wird vorzugsweise weitergebildet durch den Schritt:
- Reinigen des Prozessmischbehälters, und vorzugsweise der Messeinrichtung, zur Vorbereitung für ein nächstes Batch desselben oder eines anderen fließfähigen Beschichtungsmaterials, sobald die vorläufige Mischung in den Empfangsbehälter überführt worden ist, und bevor die Homogenisierung im Empfangsbehälter abgeschlossen ist. Hierdurch wird erreicht, dass der Prozessmischbehälter schon wieder für die Herstellung eines neuen Batches eines Beschichtungsmaterials mit ggf. abweichender Zusammensetzung genutzt werden kann, bevor die vorherige Charge den Empfangsbehälter verlassen hat. Die Infrastruktur des Prozessmischbehälters kann auf diese Weise optimal genutzt werden, und eine hohe Auslastung der Produktion bleibt sichergestellt. Vorzugsweise wird die zur Farbtonbestimmung eingerichtete Messeinrichtung auch zur Überwachung der Güte des Reinigungszustandes in der verfahrenstechnischen Anlage verwendet.

Das Verfahren wird vorzugsweise weitergebildet durch den Schritt:
- Mikrohomogenisierung der Mischung mit vorläufiger Zusammensetzung während der Überführung von dem Prozessmischbehälter in den Empfangsmischbehälter. Die Mikrohomogenisierung wird vorzugsweise mittels Einsatz eines In-Line-Dissolvers (ILD) in die Fluidleitung zwischen dem Prozessmischbehälter und dem Empfangsmischbehälter realisiert. Der ILD ist vorzugsweise dazu eingerichtet, die Mischung mit vorläufiger Zusammensetzung zumindest teilweise zu vermischen und zu dispergieren.

Ferner umfasst das Verfahren vorzugsweise den Schritt:
- Filtration der Mischung mit vorläufiger Zusammensetzung während des Überführens von dem Prozessmischbehälter in den Empfangsbehälter. Vorzugsweise wird in die Fluidleitung zwischen dem Prozessmischbehälter und dem Empfangsbehälter ein Filter eingesetzt, beispielsweise in ein Filtergehäuse.

Das Verfahren wird vorteilhaft weitergebildet, indem es ferner die folgenden Schritte umfasst:
- Sammeln mehrerer Batche bestehend aus den Komponenten und den Justiermengen für jedes Batch in dem Empfangsbehälter,
- fortgesetztes Homogenisieren der Batche in dem Empfangsbehälter, bis das Beschichtungsmaterial vorliegt, und
- Abfüllen des Beschichtungsmaterials als Charge aus dem Empfangsbehälter.

Die Dosiereinrichtung ist in bevorzugten Ausführungsformen der Erfindung dazu angepasst, eine manuelle Nachspeisung zu ermöglichen, und/oder eine automatische Nachspeisung einer, mehrerer oder sämtlicher Komponenten vorzunehmen. Insbesondere Komponenten, die den Farbton des Beschichtungsmaterials beeinflussen, werden vorzugsweise manuell über die Dosiereinrichtung nachgespeist.

Dadurch, dass mehrere Batchen in dem Empfangsbehälter gesammelt werden können, wird der Einfluss etwaiger Einwaagefehler, die nach wie vor vereinzelt auftreten können, weiter vermindert. Ferner lassen sich große Chargen mit hoher Präzision hinsichtlich der Zusammensetzung herstellen.

Besonders bevorzugt beträgt das Volumen des Empfangsbehälters ein ganzzeiliges Vielfaches des Prozessmischbehälters, beispielsweise das Zwei-, Drei- oder Vierfache.

Vorzugsweise werden zwei oder mehr Komponenten für das herzustellende Beschichtungsmaterial simultan in den Prozessmischbehälter eingewogen. Die simultane Einwaage wird bevorzugt für Hauptbestandteile des Beschichtungsmaterials wie beispielsweise Harzsysteme oder Lösungsmittel.

Insbesondere in den Ausführungsformen des erfindungsgemäßen Verfahrens, in denen eine Charge aus mehreren Batchen hergestellt wird, definiert das erste in dem Verfahrensablauf hergestellte und in den Empfangsbehälter überführte Batch vorzugsweise ein Masterbatch, und ein oder mehrere der Masterbatch nachfolgende Batchen für die Charge definieren ein jeweiliges Klon-Batch. Falls für das Masterbatch eine Nachspeisung einzelner oder mehrerer Komponenten notwendig war, wird vorzugsweise die jeweils nachgespeiste Menge beim Einwiegen der Komponenten für die jeweiligen Klon-Batche bereits mit dem Einspeisen jener Komponenten in den Prozessmischbehälter für das jeweilige Klon-Batch in den Prozessmischbehälter eingewogen. Hierdurch wird der Nachspeis-Aufwand und somit die Fertigungsdauer für die jeweiligen Klon-Batches und somit für die Charge insgesamt deutlich verringert. Diese Herstellungsform in Verbindung mit einem im Vergleich zu dem Prozessmischbehälter vergrößerten Empfangsbehälter bietet den zusätzlichen Effekt, dass sehr große Chargen aus einem Master-Batch und mehreren Klon-Batchen hergestellt werden können, wobei durch das Klonen eine hohe Präzision hinsichtlich der Zusammensetzung der Charge bei minimiertem Justieraufwand der Ein- und Nachspeisemengen erzielt wird. Zugleich sinkt durch das Klonen in Verbindung mit dem vergrößerten Empfangsbehältervolumen der Zeitbedarf für die Herstellung der Charge.

Weiter vorzugsweise wird das erfindungsgemäße Verfahren dadurch weitergebildet, dass es die folgenden Schritte umfasst:
- Rückführen des final homogenisierten, hergestellten Beschichtungsmaterials mittels einer Kreislaufleitung von dem Empfangsbehälter zu der Messeinrichtung,
- erneutes Überführen über die Messeinrichtung in den Empfangsbehälter, und
- Bestimmen eines Ist-Zustandes des Beschichtungsmittels während des Überführens in den Empfangsbehälter.

Mit dem Rückführen und erneuten Überprüfen der finalisierten Charge an der Messeinrichtung vorbei ist eine abschließende Qualitätskontrolle der homogenisierten Charge ohne zusätzlichen apparativen Aufwand möglich.

Die Erfindung ist vorstehend in einem ersten Aspekt anhand des erfindungsgemäßen Verfahrens beschrieben worden. In einem zweiten Aspekt löst die Erfindung die eingangs bezeichnete Aufgabe bei einer Mischanlage der eingangs bezeichneten Art, indem diese aufweist: Einen Prozessmischbehälter, der zur Aufnahme von Komponenten für ein Batch, im Wesentlichen in einer jeweils für das Batch vorbestimmten Menge, und zum Vermischen der Komponenten in dem Prozessmischbehälter zu einer homogenen Mischung mit vorläufiger Zusammensetzung eingerichtet ist, einen Empfangsbehälter, eine Fluidleitung, die mit dem Prozessmischbehälter und dem Empfangsbehälter zum Überführen der Mischung mit vorläufiger Zusammensetzung von dem Prozessmischbehälter in den Empfangsmischbehälter fluidleitend verbunden ist, eine der Fluidleitung zugeordnete Messeinrichtung, die zum Ermitteln eines Ist-Zustandes der Mischung mit vorläufiger Zusammensetzung während des Überführens in den Empfangsbehälter eingerichtet ist, eine mit der Messeinrichtung kommunizierende Auswerteinheit, die zum Bestimmen einer Abweichung des Ist-Zustandes der Mischung mit vorläufiger Zusammensetzung von einem vordefinierten Soll-Zustand, und zum Ermitteln einer zum Erreichen des Soll-Zustandes notwendigen Justiermenge für die Komponenten eingerichtet ist, und vorzugsweise eine Dosiereinrichtung, die dazu eingerichtet ist, in Abhängigkeit der notwendigen Justiermenge Komponenten zu der Mischung mit vorläufiger Zusammensetzung nachzuspeisen, während die Mischung mit vorläufiger Zusammensetzung bereits von dem Prozessmischbehälter in den Empfangsbehälter überführt wird.

Die Dosiereinrichtung ist in bevorzugten Ausführungsformen der Erfindung dazu angepasst, eine manuelle Nachspeisung zu ermöglichen, und/oder eine automatische Nachspeisung einer, mehrerer oder sämtlicher Komponenten vorzunehmen.

Die erfindungsgemäße Mischanlage macht sich die Vorteile und bevorzugten Ausführungsformen des erfindungsgemäßen Verfahrens zu Eigen. Bevorzugte Ausführungsformen des erfindungsgemäßen Verfahrens sind zugleich bevorzugte Ausführungsformen der erfindungsgemäßen Mischanlage und umgekehrt, weswegen diesbezüglich auch auf die obigen Ausführungen zum erfindungsgemäßen Verfahren verwiesen wird.

Der Prozessmischbehälter weist vorzugsweise ein oder mehrere Mischelemente, beispielsweise Rührorgane auf, um die eingewogenen Komponenten zu der Mischung mit vorläufiger Zusammensetzung zusammenzuführen und zu homogenisieren.

Der Empfangsbehälter weist vorzugsweise ein oder mehrere Mischelemente, beispielsweise Rührorgane, zur fortgesetzten Homogenisierung der in den Empfangsbehälter überführten Mischung auf, so dass das fertige Beschichtungsmaterial erhalten wird.

In einer bevorzugten Ausführungsform weist die Messeinrichtung eine in der Fluidleitung angeordnete Messstrecke auf, die ihrerseits einen oder mehrere Messgeräte zur Erfassung des Ist-Zustands der Mischung angeordnet sind. Der oder die Messgeräte sind vorzugsweise dazu ausgebildet, einen oder mehrere der folgenden charakteristischen Parameter quantitativ zu erfassen:
Viskosität, pH-Wert, Farbton, Dichte, Transparenz, Leitfähigkeit und/oder Partikelgröße.

Die Messeinrichtung und die Auswerteinheit sind vorzugsweise dazu eingerichtet, den Ist-Zustand der Mischung mit vorläufiger Zusammensetzung während des Überführens in den Empfangsbehälter kontinuierlich zu erfassen.

Die Dosiereinrichtung weist vorzugsweise für jede der Komponenten eine Zufuhrleitung auf, die mit einer (festen oder auswechselbaren) Rohstoffquelle verbindbar ist. In der Zufuhrleitung ist jeweils vorzugsweise ein Sensor zur Erfassung der Durchflussmenge (Massenstrom und/oder Volumenstrom) angeordnet. Ferner ist vorzugsweise in jeder der Zufuhrleitungen ein Ventil zum selektiven Freigeben oder Schließen der Zufuhrleitung angeordnet. Die Dosiereinrichtung ist vorzugsweise signalleitend mit einer elektronischen Steuereinheit verbunden, die ihrerseits mit der Auswerteinheit verbunden ist, oder in die Auswerteinheit integriert ist. Die elektronische Steuereinheit ist vorzugsweise dazu eingerichtet, auf Basis der von der Auswerteinheit übermittelten charakteristischen Parameter betreffend den Ist-Zustand der vorläufigen Mischung Mengenwerte für die nachzuspeisenden Komponenten zu ermitteln, und die Ventile in den Zufuhrleitungen der Dosiereinrichtung derart freizugeben und zu schließen, dass, nachverfolgbar und vorzugsweise geregelt mittels der in den Zufuhrleitungen installierten Sensoren zur Erfassung der Durchflussmenge die ermittelten nachzuspeisenden Mengen der Komponenten in den Prozessmischbehälter und/oder den Empfangsbehälter eingeführt werden. Alternativ oder zusätzlich erfolgt die Bilanzierung der zugegebenen Komponenten (Rohstoffmengen) aber durch die Nachverwiegung/Netto-Verwiegung der Quellen der Komponenten (Rohstoffbehälter) nach Entnahme der Soll-Menge durch Platzierung dieser auf Waagezellen, Druckmessdosen bzw. ähnliche Waagevorrichtungen. Alternativ oder zusätzlich erfolgt eine Zufuhr von bereits vorgewogenen Mengen einer Komponente (Rohstoff) für ein Batch, also eine Vorchargierung dieser Komponente offline von der verfahrenstechnischen Anlage, um die geforderte Genauigkeit der Materialversorgung eines Rohstoffes zu gewährleisten.

Zur Dosierung werden in bevorzugten Ausführungsformen anstelle einer Kombination von gesteuertem Ventil und Durchflussmengensensor Dosierventile vorgeschlagen, die volumengenau steuerbar sind, ohne dass eine separate Durchflussmengenmessung erforderlich ist. Beispielsweise können zur Dosierung Quetschventile oder Nadelventile verwendet werden, deren Austragsmenge mit hoher Genauigkeit über die Steuerung der Förderzyklen oder Förderdauern steuerbar ist. Alternativ wird die Verwendung von Membranventilen, Spindelventilen oder anderen volumenfördernden Dosierventilen vorgeschlagen.

Die Zufuhrleitungen der erfindungsgemäßen Mischanlage sind in bevorzugten Ausgestaltungen wahlweise fluidleitend mit dem Prozessmischbehälter und/oder mit dem Empfangsbehälter verbunden, um ein Nachspeisen direkt in den jeweiligen Behälter zu ermöglichen.

Die zwischen dem Prozessmischbehälter und dem Empfangsbehälter angeordnete Fluidleitung weist vorzugsweise einen oder mehrere fluiddicht verschließbare Auslässe zur Reinigung der Fluidleitung, insbesondere mittels Druckluft und/oder einer Waschflüssigkeit, auf. Zu Reinigungszwecken weist die Fluidleitung vorzugsweise sowohl auf Seiten des Prozessmischbehälters als auch auf Seiten des Empfangsbehälters Sperrorgane auf, die zum Durchführen einer Reinigung der Fluidleitung fluid- und vorzugsweise druckdicht verschlossen werden können.

In einer bevorzugten Ausführungsform ist der Prozessmischbehälter mit einer oder mehreren Ablassöffnungen zum Reinigen des Prozessmischbehälters nach erfolgter Überführung der vorläufigen Mischung in Richtung des Empfangsbehälters ausgerüstet.

Den Zufuhrleitungen der Dosiereinrichtung sind vorzugsweise jeweils Pumpen zugeordnet, die ebenfalls mit der elektronischen Steuereinheit zum Zuführen der Komponenten kommunizieren.

In einer bevorzugten Ausführungsform sind der Prozessmischbehälter und/oder die Fluidleitung zwischen dem Prozessmischbehälter und dem Empfangsmischbehälter fluidleitend mit einer dedizierten Reinigungsmittel-Versorgungsleitung verbunden, mittels welcher Reinigungsflüssigkeit in den Prozessmischbehälter und/oder die Fluidleitung eingeführt werden kann. Eine kontinuierliche Ermittlung des Reinigungsergebnisses des Mischbehälters durch die Farbton-Messeinrichtung ist weiterhin möglich.

Die Erfindung wird im Folgenden unter Bezugnahme auf die beigefügte Figur anhand eines bevorzugten Ausführungsbeispiels näher beschrieben.

Die Figur zeigt eine erfindungsgemäße Mischanlage in einer schematischen Darstellung gemäß einem bevorzugten Ausführungsbeispiel.

Die in der Figur gezeigte Mischanlage 1 zur chargenbasierten Herstellung eines Beschichtungsmaterials, weist einen Prozessmischbehälter 3 und einen Empfangsbehälter 5 auf. Der Prozessmischbehälter 3 und der Empfangsbehälter 5 sind fluidleitend mittels einer Fluidleitung 7 verbunden.

Im Prozessmischbehälter 3 und dem Empfangsbehälter 5 ist jeweils wenigstens ein Mischelement, beispielsweise in Form eines motorisch angetriebenen Rührwerks 9,11, angeordnet.

Die Fluidleitung 7 ist zum Überführen einer vorläufigen Mischung aus dem Prozessmischbehälter 3 in den Empfangsbehälter 5 eingerichtet und weist vorzugsweise einlass- und auslassseitig ein erstes und zweites Absperrorgan 13,15 auf. Das Absperrorgan 13,15 ist vorzugsweise jeweils als Dreiwege-Absperrorgan ausgebildet, so dass einer der Abgänge zum Einfüllen bzw. Auslassen von Reinigungsfluid verwendet werden kann. Optional lässt sich der jeweilige Abgang mit einer fest installierten Reinigungsmittelversorgung fluidleitend verbinden.

Die Mischanlage 1 weist ferner eine Dosiereinrichtung 17 auf, die zum kontrollierten Zuführen der einzelnen Komponenten des herzustellenden Beschichtungsmaterials eingerichtet ist. Die Dosiereinrichtung 17 weist mehrere Zufuhrleitungen 11a,b,c auf, welche wahlweise mit festinstallierten Rohstoffbehältern 19 oder austauschbaren Wechselgebinden 21 fluidleitend verbindbar sind.

Hauptbestandteile des herzustellenden Beschichtungsmaterials, die bei überwiegenden Anzahl der herzustellenden Beschichtungsmaterialien erwartbar die Gleichen sind, werden vorzugsweise in den fest installierten Rohstoffbehältern 19 vorgehalten, während Komponenten, die abhängig von dem herzustellenden Beschichtungsmaterial variieren können, vorzugsweise in den Wechselgebinden 21 vorgehalten werden.

In der Fluidleitung 7 zwischen dem Prozessmischbehälter 3 und dem Empfangsbehälter 5 ist eine Messeinrichtung 23 angeordnet welche zur kontinuierlichen Bestimmung des Ist-Zustandes der in dem Prozessmischbehälter 3 vorliegenden vorläufigen Mischung aus einzelnen Komponenten eingerichtet ist, während diese von dem Prozessmischbehälter 3 in den Empfangsbehälter 5 überführt werden. Hierzu sind in der Messeinrichtung 23 ein oder mehrere Messgeräte angeordnet, die vorzugsweise zur Bestimmung eines, mehrerer oder sämtlicher der Folgenden ausgebildet sind: pH-Wert, Viskosität, Farbton, Transparenz, Dichte und/oder Partikelgröße.

Die Messeinrichtung 23 ist signalleitend mit einer Auswerteinheit 25a verbunden, welche dazu eingerichtet ist, den von der Messeinrichtung 23 erfassten und an die Auswerteinheit 25a übermittelten Ist-Zustand der vorläufigen Mischung mit einem vordefinierten Soll-Zustand für die vorläufige Mischung zur Herstellung des Beschichtungsmaterials abzugleichen. Die Auswerteinheit 25a ist signalleitend mit einer elektronischen Steuereinheit 25b verbunden. Die Auswerteinheit 25a und die Steuereinheit 25b sind alternativ als separate Geräte, oder, wie gezeigt, als eine Einheit (Bezugszeichen 25) ausgebildet. Wird für die von der Messeinrichtung 23 ermittelten Parameter, also beispielsweise Viskosität, pH-Wert, Farbton etc., eine Abweichung des Ist-Zustandes von jenem Soll-Zustand festgestellt, ist die elektronische Steuereinheit 25b dazu eingerichtet, die Dosiereinrichtung 17 derart anzusteuern, dass der Fehlbetrag zwischen Ist-Zustand und Soll-Zustand angeglichen wird.

Das gesteuerte Nachspeisen von einzelnen Komponenten zu der Mischung mit vorläufiger Zusammensetzung hinzu wird nachfolgend am Beispiel der Überwachung des pH-Wertes der Mischung beschrieben. Nachdem für das im Prozessmischbehälter 3 zu bearbeitende Batch die notwendigen Komponenten in den Prozessmischbehälter 3 eingewogen worden sind, und eine Homogenisierung der Mischung mit vorläufiger Zusammensetzung vorgenommen wurde, welche das Überführen und Überprüfen der Mischung mit vorläufiger Zusammensetzung ermöglicht, wird in der Fluidleitung 7 während der Überführung der Mischung mit vorläufiger Zusammensetzung in den Empfangsbehälter von der Messeinrichtung 23 mit einem entsprechend eingerichteten Messgerät der pH-Wert der Mischung gemessen.

Die Auswerteinheit 25a vergleicht den gemessenen pH-Wert mit einem vorbestimmten Soll-Wert. Wird eine unzulässig große Abweichung zwischen Ist-Wert und Soll-Wert hinsichtlich des gemessenen pH-Wertes festgestellt, berechnet die Auswerteinheit 25a mittels mathematischer Modelle die nachzuspeisende Menge derjenigen Komponente, die für eine Anpassung des pH-Wertes verantwortlich ist, dies kann beispielsweise eine DMEA-Lösung sein (DMEA = Dimetyhlethanolamine). Die Überführung von der Mischung mit vorläufiger Zusammensetzung in Richtung des Empfangsbehälters kann optional für die Dauer der Nachspeisung unterbrochen werden.

Beim Durchführen der Nachspeisung wird entweder die benötigte Menge der nachzuspeisenden Komponente an einem Anzeigegerät ausgegeben, oder die Auswerteinheit 25a kommuniziert mit der Steuereinheit 25b, um eine Zufuhr über die Dosiereinrichtung 12 in den Prozessmischbehälter zu veranlassen. Im Prozessmischbehälter 3 wird sodann mittels des Rührorgans 9 die nachträglich eingespeiste Komponentenmenge in die Mischung mit vorläufiger Zusammensetzung untergemischt, bis wiederum ein homogener Batch vorliegt.

Auf diese Weise wird mitunter in iterativen Schritten solange Material aus den Komponenten für das Batch des herzustellenden Beschichtungsmaterials nachgespeist, bis der überwachte Parameter, hier der pH-Wert, den Ist-Soll-Abgleich besteht.

Sodann wird mit der Überprüfung der nächsten Produkteigenschaft fortgefahren.

In dem Fall, dass eine Nachspeisung der die jeweils gemessene Produkteigenschaft beeinflussende Komponente nicht spezifikationsrelevant ist, und, wie vorstehend beschrieben, eine Nachspeisung direkt in den Empfangsbehälter erfolgen kann, muss in der Regel keine iterative Nachspeisung erfolgen.

Während die Anpassung des pH-Wertes mittels Zugabe der vorstehend beschriebenen DMEA-Lösung erfolgen kann, kann beispielsweise die Anpassung der Viskosität mittels Zugabe von Wasser erfolgen.

Die Anpassung des Farbtons kann mittels Zugabe entsprechender Farbpigmente erfolgen.

Vorzugsweise ist die Dosiereinrichtung 17 alternativ oder zusätzlich manuell steuerbar, um eine manuelle Nachspeisung einer, mehrerer oder sämtlicher Komponenten vorzunehmen. Für eine manuelle Nachspeisung mittels der Dosiereinrichtung 17 ist es vorteilhaft, wenn die elektronische Steuereinheit 25b dazu eingerichtet ist, die von der Auswerteinheit 25a ermittelte Abweichung zwischen Ist-Zustand und Soll-Zustand an ein Anzeigegerät zu übermitteln (hier nicht dargestellt).

Die Dosiereinrichtung 17 umfasst zu diesem Zwecke in jeder der Rohrleitungen 11a,b,c Mittel 27 zum Fördern der in der jeweiligen Zufuhrleitung strömenden Komponente. Die Fördermittel 27 sind beispielsweise ausgebildet als Pumpen.

Ferner umfasst die Dosiereinrichtung 17 in jeder der Zufuhrleitungen 11a,b,c einen oder mehrere Sensoren zur Durchflussmessung, beispielsweise ausgebildet als Coriolis-Massendurchflussmesser 29.

Ferner umfasst die Dosiereinrichtung 17 vorzugsweise für jede Zufuhrleitung 11a,b,c einen oder mehrere Ventile 31. Einzelne, mehrere oder sämtliche der Ventile 31 sind vorzugsweise in einem Dosierkarussell 12 am Prozessmischbehälter 3 angeordnet.

Komponenten, von denen für das herzustellende Beschichtungsmaterial erwartungsgemäß größere Mengen zugeführt werden müssen, sind vorzugsweise alternativ oder zusätzlich mittels der Zufuhrleitungen 11b direkt an den Prozessmischbehälter 11b angeschlossen, ohne über das Dosierkarussell 12 geführt zu werden.

Einige der Zufuhrleitungen, nämlich die in der Figur gezeigten Zufuhrleitungen 11c, sind direkt mit dem Empfangsbehälter 5 fluidleitend verbunden.

Die elektronische Steuereinheit 25 ist dazu eingerichtet, vorzugsweise unter Einbindung der Durchflussmesser 29, einen geregelten Strom von einzelnen Komponenten mittels Ansteuerung der Fördermittel 27 und der Ventile 31 in den Prozessmischbehälter 3 oder den Empfangsbehälter 5 nachzuspeisen.

Der Empfangsbehälter 5 weist ein Ablassventil 33 auf, um nach vollendeter Herstellung des Beschichtungsmaterials das Beschichtungsmaterial in einen oder mehrere Transportbehälter 35 abfüllen zu können.

Das Ablassventil 33 kann beispielsweise als Mehrwegeventil ausgebildet sein, und die Mischanlage 1 kann vorzugsweise ferner eine Kreislaufleitung 37 aufweisen, mittels welcher das Beschichtungsmaterial in die Fluidleitung 7 stromaufwärts der Messeinrichtung 23 befördert werden kann, um mittels der Messeinrichtung 23 die Produkteigenschaften des hergestellten Beschichtungsmaterials überprüfen zu können.

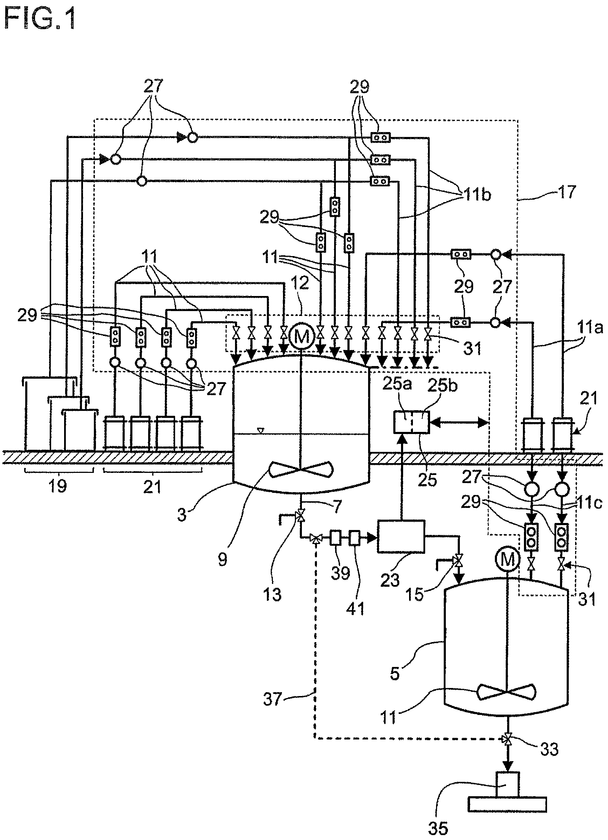

Optionale Weiterbildungen der Mischanlage 1, welche in Figur 1 nicht dargestellt sind, betreffen einerseits das optionale Nachspeisen von Komponenten des Beschichtungsmaterials direkt in die Fluidleitung 7. Hierzu wären zusätzliche oder alternative Zufuhrleitungen von den Rohstoffbehältern 19, 21, oder von der Dosiereinrichtung 12, zu der Fluidleitung 7 stromaufwärts der Messeinrichtung 23 vorzusehen, die zugunsten einer einfacheren Darstellung hier nicht eingezeichnet sind.

Zum anderen ist vorzugsweise stromaufwärts der Dosiereinrichtung 12 für eine, mehrere oder sämtliche Komponenten die Möglichkeit einer manuellen Einspeisung der Komponente in den Prozessmischbehälter 3 vorgesehen. Auch dies ist zugunsten einer einfacheren Darstellung nicht explizit dargestellt.

In der Fluidleitung 7 ist vorzugsweise stromaufwärts von der Messeinrichtung 23 ein Filtereinsatz 39 montiert. Weiter vorzugsweise ist, ebenfalls stromaufwärts der Messeinrichtung 23, in der Fluidleitung 7 ein In-Line-Dissolver (ILD) 41 angeordnet.

Nachfolgend wird exemplarisch der Betrieb der Mischanlage gemäß der beigefügten Figur beschrieben.

Zunächst wird festgelegt, welche Komponenten für die herzustellende Charge des Beschichtungsmaterials benötigt werden. Die Komponenten werden in festinstallierten Rohstoffbehältern 19 oder Wechselgebinden 21 bereitgestellt. Abhängig von dem herzustellenden Beschichtungsmaterial erfolgt sodann eine erste Einwaage, indem die benötigten Komponenten mittels der Zufuhrleitungen 11a,b, vorzugsweise mittels Steuerung durch die elektronische Steuereinheit 25b, in den Prozessmischbehälter 3 eingespeist werden. Hierzu steuert die elektronische Steuereinheit 25b die jeweiligen Fördermittel 27 an und öffnet bzw. schließt die Ventile 31 entsprechend der von den Durchfluss-Sensoren 29 erfassten Fördermengen.

Nachdem das Einspeisen der Komponenten für die zu fertigende Charge vorgabegemäß erfolgt ist, werden die Komponenten in dem Prozessmischbehälter 3 unter Betätigung des motorisch angetriebenen Rührwerks 9 vermischt, so dass eine vorläufige Mischung entsteht. Die vorläufige Mischung sollte bei optischer Inspektion eine gleichmäßige Konsistenz und Farbe aufweisen.

Sobald die vorläufige Mischung in ausreichender Güte vorliegt, startet die Überführung der vorläufigen Mischung durch die Fluidleitung 7 in den Empfangsbehälter 5. Hierbei wird durch die Messeinrichtung 23 der Ist-Zustand der vorläufigen Mischung während des Überführens ermittelt. Der ermittelte Ist-Zustand, welcher in Form von Messwerten der in einer Messstrecke angeordneten Messgeräte vorliegt, wird an die Auswerteinheit 25a übermittelt. Die Auswerteinheit 25a bestimmt, ob der Ist-Zustand der vorläufigen Mischung von einem für das herzustellende Beschichtungsmaterial abweichenden Soll-Zustand abweicht. Liegt eine Abweichung vor, ermittelt die Auswerteinheit 25a, welche Justiermenge(n) der jeweiligen Komponente(n) notwendig ist bzw. sind, um den Ist-Zustand an den Soll-Zustand anzugleichen. Auf Basis dieser Bestimmung kommuniziert die Auswerteeinheit 25a in einer Nachspeiseanforderung an die Steuereinheit 25b, steuert die Steuereinheit 25b die Dosiereinrichtung 17 an. Alternativ erfolgt auf Basis der Bestimmung eine manuelle Nachspeisung.

Stellt beispielsweise die Messeinrichtung 23 fest, dass der pH-Wert der vorläufigen Mischung unterhalb des Soll-Zustands liegt, wird die Dosiereinrichtung 17 dahingehend angesteuert, dass diejenige Komponente, welche den pH-Wert maßgeblich beeinflusst, in benötigter Menge nachgespeist wird. Der Betrag der Abweichung bestimmt hierbei die Menge der nachzuspeisenden Komponente.

Die Nachspeisung erfolgt vorzugsweise in den Prozessmischbehälter 3 hinein. Wird allerdings ein Beschichtungsmaterial hergestellt, welches nach der Einwaage der Beschichtungsrohstoffe nicht erneut geprüft werden muss, erfolgt die Nachspeisung zumindest einiger Komponenten vorzugsweise unmittelbar in den Empfangsbehälter 5 hinein. Vorzugsweise sind die durch die Zufuhrleitung 11c geförderten Komponenten dementsprechend maßgeblich für die Beeinflussung des pH-Werts und die Viskosität zuständig, nicht aber für den Farbton.

Vorzugsweise erfolgt eine Vor-/Einwaage von nicht spezifikationsrelevanten Anteilen einer Charge des herzustellenden Beschichtungsmaterials direkt in dem Empfangsbehälter. Farbtonsensible Komponenten werden vorzugsweise anteilig zu der herzustellenden Charge in den Prozessmischbehälter eingewogen, und dann während der Überführung in den Empfangsbehälter hinein mittels der Messeinrichtung 23 hinsichtlich der Produkteigenschaften und Bestimmung des Ist-Zustandes überwacht und durch Nachspeisung erforderlichenfalls korrigiert. Eine finale Durchmischung der Komponenten für die Charge kann dann im Empfangsbehälter erfolgen.

Sobald der Prozessmischbehälter 3 vollständig in die Fluidleitung 7 und den Empfangsbehälter 5 entleert ist, kann der Prozessmischbehälter 3 von der Fluidleitung 7 getrennt werden, etwa durch Schließen des Absperrorgans 13, und für ein nachfolgendes Batch und/oder eine nachfolgende Charge mittels Reinigung etc. vorbereitet werden.

Ebenso kann die Fluidleitung 7, nachdem sie vollständig in den Empfangsbehälter 5 entleert wurde, und die Überführung der vorläufigen Mischung in den Empfangsbehälter 5 abgeschlossen ist, durch die Absperrorgane 13 und 15 gereinigt werden. Die Reinigung erfolgt vorzugsweise mittels Spülen mit einer Reinigungsflüssigkeit, mittels Molchtechnik und/oder mittels Druckluftreinigung.

Alternativ zu der in der Figur gezeigten Kombination aus Fördermittel 27, Durchfluss-Sensor 29 und Ventil 31 können auch andere Dosiermechanismen vorgesehen werden, beispielsweise unter Verwendung von schwerkraftbasierter Materialförderung und Dosierventilen, die als Volumenförderer ausgebildet sind oder integrierte Massen- oder Volumenstrommessaufnehmer enthalten.

Während die fortgesetzte Homogenisierung von der vorläufigen Mischung hin zum fertigen Beschichtungsmaterial in dem Empfangsbehälter 5 noch andauert, wird in einer bevorzugten Ausgestaltung des erfindungsgemäßen Verfahrens in dem Prozessmischbehälter 3 bereits mit dem Einspeisen von Komponenten für ein nachfolgendes Batch des gleichen oder eines anderen herzustellenden Beschichtungsmaterials begonnen. Soll ein weiteres Batch desselben Beschichtungsmaterials hergestellt werden, das bereits im Empfangsbehälter 5 homogenisiert wird, kann dieses im laufenden Prozess in den Empfangsbehälter 5 überführt werden, so dass der Empfangsbehälter 5 (sofern ausreichend groß dimensioniert), mehrere Batchen sammeln und homogenisieren kann. Hierdurch wirken sich etwaige Fehldosierungen, die in einem Batch auftreten können, weniger stark auf die gesamte Charge aus, so dass die Reproduzierbarkeit der Fertigung verbessert wird.

Die Herstellung einer Charge mittels mehrerer Batchen wird dadurch weiter verbessert, dass ein erstes Batch für die herzustellende Charge gewissermaßen ein Masterbatch für das herzustellende Beschichtungsmaterial definiert:
Die für das erste im Prozessmischbehälter eingewogene Batch ermittelte notwendige Nachspeisung einzelner Komponenten wird vorzugsweise gespeichert und für eine oder mehreren folgende Batche der gesamten Charge gleich zu Beginn des jeweiligen Einspeisevorgangs mit in den Prozessmischbehälter eingewogen. Hierdurch sinkt der Nachspeiseaufwand für die folgenden Batche der Charge, und die Fertigungsdauer kann weiter reduziert werden. In der Messeinrichtung 23 muss dann quasi nur noch zur Qualitätsüberprüfung überwacht werden, ob die "Klon-Batche" hinreichend nahe an dem zuvor definierten "Masterbatch" liegen. Die finale Homogenisierung erfolgt während dieser Überprüfung in Empfangsbehälter auf vorteilhafte Weise.

## Patentansprüche

1. Verfahren zur batchbasierten Fertigung eines fließfähigen Beschichtungsmaterials, insbesondere wasserbasierten oder lösungsmittelhaltigen Lacks, aus einer Mehrzahl von Komponenten, umfassend die Schritte:
- Einspeisen von Komponenten für ein Batch in einen Prozessmischbehälter (3), im Wesentlichen in einer jeweils für das Batch vorbestimmten Menge,
- Vermischen der Komponenten in dem Prozessmischbehälter (3) zu einer Mischung mit vorläufiger Zusammensetzung,
- Überführen wenigstens eines Teils der Mischung mit vorläufiger Zusammensetzung von dem Prozessmischbehälter (3) in einen Empfangsbehälter (5)
- Ermitteln eines Ist-Zustandes der Mischung mit vorläufiger Zusammensetzung während des Überführens in den Empfangsbehälter (5),
- Bestimmen einer Abweichung des Ist-Zustandes der Mischung mit vorläufiger Zusammensetzung von einem vordefinierten Soll-Zustand,
- Ermitteln einer zum Erreichen des Soll-Zustands notwendigen Justiermenge für die Komponenten, und
- Nachspeisen der Justiermenge der Komponenten zu der vorläufigen Mischung, während die vorläufige Mischung bereits von dem Prozessmischbehälter (3) in den Empfangsbehälter (5) überführt wird, **dadurch gekennzeichnet, dass** der Empfangsbehälter (5) derjenige Behälter ist, aus dem das fliessfähige Beschichtungsmaterial nach Fertigstellung abgefüllt wird.

2. Verfahren nach Anspruch 1,
wobei sämtliche Komponenten des Batches in den Prozessmischbehälter eingespeist werden.

3. Verfahren nach Anspruch 1,
wobei ein Teil der Komponenten, insbesondere diejenigen Komponenten, welche für das herzustellende Beschichtungsmaterial spezifikationsrelevant sind, in den Prozessmischer eingespeist wird, und die übrigen Komponenten für das Batch in den Empfangsbehälter eingespeist werden.

4. Verfahren nach einem der vorstehenden Ansprüche,
weiter umfassend die Schritte:
- Erhalt des Beschichtungsmaterials mittels fortgesetztem Homogenisieren der vorläufigen Mischung samt der Justiermenge in dem Empfangsbehälter (5), und
- Abfüllen des Beschichtungsmaterials aus dem Empfangsbehälter (5).

5. Verfahren nach einem der vorstehenden Ansprüche,
wobei der Schritt des Überführens der Mischung mit vorläufiger Zusammensetzung beginnt, nachdem die vorläufige Mischung für eine vorbestimmte Zeit im Prozessmischbehälter (3) gemischt worden ist.

6. Verfahren nach einem der vorstehenden Ansprüche,
wobei die Mischung mit vorläufiger Zusammensetzung zur Überführung in den Empfangsbehälter eine zwischen dem Prozessmischbehälter (3) und dem Empfangsbehälter (5) angeordnete Messeinrichtung (23) durchläuft, in welcher der Ist-Zustand der Mischung mit vorläufiger Zusammensetzung mittels eines oder mehrerer Messgeräte ermittelt wird.

7. Verfahren nach einem der vorstehenden Ansprüche,
wobei der Ist-Zustand mittels Messung eines oder mehrerer charakteristischer Parameter für die Mischung mit vorläufiger Zusammensetzung ermittelt wird, und wobei der Soll-Zustand mittels vordefinierter Zielwerte der charakteristischen Parameter für die Mischung mit vorläufiger Zusammensetzung definiert ist,
wobei die charakteristischen Parameter vorzugsweise ausgewählt sind aus der Liste:
- Viskosität,
- pH-Wert,
- Farbton,
- Dichte,
- Transparenz, und/oder
- Partikelgröße.

8. Verfahren nach einem der vorstehenden Ansprüche,
wobei das Ermitteln des Ist-Zustands kontinuierlich während des Überführens in den Empfangsbehälter (5) erfolgt.

9. Verfahren nach einem der vorstehenden Ansprüche,
wobei das Nachspeisen der Komponenten mittels Einfüllen direkt in den Prozessmischbehälter (3) erfolgt.

10. Verfahren nach einem der vorstehenden Ansprüche,
wobei das Nachspeisen der Komponenten mittels Einfüllen in eine Fluidleitung (7) zwischen dem Prozessmischbehälter (3) und dem Empfangsbehälter (5) erfolgt, vorzugsweise stromaufwärts der Messeinrichtung (23).

11. Verfahren nach einem der Ansprüche 1 bis 8,
wobei das Nachspeisen der Komponenten mittels Einfüllen direkt in den Empfangsbehälter (5) erfolgt.

12. Verfahren nach einem der vorstehenden Ansprüche, umfassend
- Reinigen des Prozessmischbehälters (3), und vorzugsweise der Messeinrichtung, zur Vorbereitung für eine nächste Charge desselben oder eines anderen fließfähigen Beschichtungsmaterials, sobald die vorläufige Mischung in den Empfangsbehälter (5) überführt worden ist, und bevor die Homogenisierung im Empfangsbehälter (5) abgeschlossen ist.

13. Verfahren nach einem der vorstehenden Ansprüche,
umfassend:
- Sammeln mehrerer homogener Batche bestehend aus den Komponenten und den Justiermengen für jedes Batch in dem Empfangsbehälter (5),
- Fortgesetztes Homogenisieren der Batche in dem Empfangsbehälter (5), bis eine Charge mit einem Beschichtungsmaterial vorliegt, und
- Abfüllen des Beschichtungsmaterials der Charge aus dem Empfangsbehälter (5), wobei vorzugsweise das erste in dem Verfahren nach einem der vorstehenden Ansprüche hergestellte Batch ein Masterbatch definiert, und weiter vorzugsweise eine oder mehrere nachfolgende Batche jeweils ein Klon-Batch definieren, und in dem Verfahren hergestellt werden, indem die für das Masterbatch nachgespeisten Mengen einer oder mehrerer nachzuspeisender Komponenten bereits mit dem Einspeisen der Komponenten für das jeweilige Klon-Batch in den Prozessmischbehälter eingewogen werden.

14. Verfahren nach einem der Ansprüche 6 bis 13,
umfassend:
- Rückführen des final homogenisierten, hergestellten Beschichtungsmaterials mittels einer Kreislaufleitung (37) von dem Empfangsbehälter (5) zu der Messeinrichtung (23) und erneutes Überführen über die Messeinrichtung (23) in den Empfangsbehälter (5), und Bestimmen eines Ist-Zustandes des Beschichtungsmittels während des Überführens in den Empfangsbehälter (5).

15. Mischanlage (1) zum batchbasierten Fertigen eines fließfähigen Beschichtungsmaterials, insbesondere wasserbasierten oder lösungsmittelhaltigen Lacks, aus einer Mehrzahl von Komponenten, mit:
- einem Prozessmischbehälter (3), der zur Aufnahme von Komponenten für ein Batch, im wesentlichen in einer jeweils für das Batch vorbestimmten Menge, und zum Vermischen der Komponenten in dem Prozessmischbehälter (3) zu einer Mischung mit vorläufiger Zusammensetzung eingerichtet ist,
- einem Empfangsbehälter (5) und einen Auslass zum Abfüllen des fließfähigen Materials nach dessen Fertigstellung aufweist,
- einer Fluidleitung (7), die mit dem Prozessmischbehälter (3) und dem Empfangsbehälter (5) zum Überführen der Mischung mit vorläufiger Zusammensetzung von dem Prozessmischbehälter (3) in den Empfangsbehälter (5) fluidleitend verbunden ist,
- einer der Fluidleitung (7) zugeordneten Messeinrichtung (23), die zum Ermitteln eines Ist-Zustandes der Mischung mit vorläufiger Zusammensetzung während des Überführens in den Empfangsbehälter eingerichtet ist,
- einer mit der Messeinrichtung (23) kommunizierenden Auswerteinheit (25a), die zum Bestimmen einer Abweichung des Ist-Zustandes der Mischung mit vorläufiger Zusammensetzung von einem vordefinierten Soll-Zustand, und zum Ermitteln einer zum Erreichen des Soll-Zustands notwendigen Justiermenge für die Komponenten eingerichtet ist, und
- einer Dosiereinrichtung (12), die dazu eingerichtet ist, in Abhängigkeit der notwendigen Justiermenge Komponenten zu der Mischung mit vorläufiger Zusammensetzung nachzuspeisen, während die Mischung mit vorläufiger Zusammensetzung bereits von dem Prozessmischbehälter (3) in den Empfangsbehälter (5) überführt wird, **dadurch gekennzeichnet, dass** der Empfangsbehälter (5) derjenige Behälter ist, aus dem das fliessfähige Beschichtungsmaterial nach Fertigstellung abgefüllt wird.

## Claims

1. Method for the batch-based manufacture of a flowable coating material, in particular water-based or solvent-containing paint, from a multiplicity of components, comprising the steps:
- feeding components for a batch into a process mixing container (3), essentially in a quantity respectively predetermined for the batch,
- mixing the components in the process mixing container (3) in order to form a mixture having a preliminary composition,
- transferring at least a part of the mixture having a preliminary composition from the process mixing container (3) into a reception container (5),
- ascertaining an actual state of the mixture having a preliminary composition during the transfer into the reception container (5),
- determining a deviation of the actual state of the mixture having a preliminary composition from a predefined setpoint state,
- ascertaining an adjustment quantity for the components, which is required in order to reach the setpoint state, and
- topping up the adjustment quantity of the components into the preliminary mixture, while the preliminary mixture is already being transferred from the process mixing container (3) into the reception container (5), **characterized in that** the reception container (5) is that container from which the flowable coating material is removed following completion.

2. Method according to Claim 1,
wherein all the components of the batch are fed into the process mixing container.

3. Method according to Claim 1,
wherein some of the components, in particular those components which are specification relevant for the coating material to be produced, are fed into the process mixer, and the other components for the batch are fed into the reception container.

4. Method according to one of the preceding claims, further comprising the steps of:
- obtaining the coating material by means of progressive homogenization of the preliminary mixture together with the adjustment quantity in the reception container (5), and
- removing the coating material from the reception container (5).

5. Method according to one of the preceding claims,
wherein the step of transferring the mixture having a preliminary composition starts after the preliminary mixture has been mixed for a predetermined time in the process mixing container (3).

6. Method according to one of the preceding claims,
wherein the mixture having a preliminary composition passes through a measuring device (23), which is arranged between the process mixing container (3) and the reception container (5) and in which the actual state of the mixture having a preliminary composition is ascertained by means of one or more measuring instruments, for transfer into the reception container.

7. Method according to one of the preceding claims,
wherein the actual state is ascertained by means of measuring one or more characteristic parameters of the mixture having a preliminary composition, and wherein the setpoint state is defined by means of predefined target values of the characteristic parameters of the mixture having a preliminary composition,
wherein the characteristic parameters are selected from the following list:
- viscosity,
- pH,
- hue,
- density,
- transparency, and/or
- particle size.

8. Method according to one of the preceding claims,
wherein the ascertainment of the actual state is carried out continuously during the transfer into the reception container (5).

9. Method according to one of the preceding claims,
wherein the topping up of the components is carried out by means of introduction directly into the process mixing container (3).

10. Method according to one of the preceding claims,
wherein the topping up of the components is carried out by means of introduction into a fluid line (7) between the process mixing container (3) and the reception container (5), preferably upstream of the measuring device (23) .

11. Method according to one of Claims 1 to 8,
wherein the topping up of the components is carried out by means of introduction directly into the reception container (5).

12. Method according to one of the preceding claims, comprising
- cleaning of the process mixing container (3), and preferably of the measuring device, in order to prepare for a subsequent production run of the same or a different flowable coating material, as soon as the preliminary mixture has been transferred into the reception container (5) and before the homogenization in the reception container (5) has been completed.

13. Method according to one of the preceding claims, comprising:
- collecting a plurality of homogeneous batches consisting of the components and the adjustment quantities for each batch in the reception container (5),
- progressively homogenizing the batches in the reception container (5), until a production run of a coating material is obtained, and
- removing the coating material of the production run from the reception container (5),
wherein preferably the first batch produced in the method according to one of the preceding claims defines a master batch, and further preferably one or more subsequent batches respectively define a clone batch and are produced in the method by the quantities of one or more components to be topped up, which are topped up for the master batch, already being weighed into the process mixing container with the feeding of the components for the respective clone batch.

14. Method according to one of Claims 6 to 13, comprising:
- returning the finally homogenized coating material, which has been produced, by means of a circulating line (37) from the reception container (5) to the measuring device (23) and re-transferring via the measuring device (23) into the reception container (5), and determining an actual state of the coating composition during the transfer into the reception container (5).

15. Mixing system (1) for the batch-based manufacture of a flowable coating material, in particular water-based or solvent-containing paint, from a multiplicity of components, having:
- a process mixing container (3), which is configured in order to receive components for a batch, essentially in a quantity respectively predetermined for the batch, and in order to mix the components in the process mixing container (3) in order to form a mixture having a preliminary composition,
- a reception container (5), and an outlet for removing the flowable material after completion thereof,
- a fluid line (7), which is fluidically connected to the process mixing container (3) and the reception container (5) in order to transfer the mixture having a preliminary composition from the process mixing container (3) into the reception container (5),
- a measuring device (23), which is assigned to the fluid line (7) and is configured in order to ascertain an actual state of the mixture having a preliminary composition during the transfer into the reception container,
- an evaluation unit (25a), which is in communication with the measuring device (23) and is configured in order to determine a deviation of the actual state of the mixture having a preliminary composition from a predefined setpoint state, and in order to ascertain an adjustment quantity for the components, which is required in order to reach the setpoint state, and
- a dosing device (12), which is configured in order to top up components into the mixture having a preliminary composition as a function of the required adjustment quantity, while the mixture having a preliminary composition is already being transferred from the process mixing container (3) into the reception container (5), **characterized in that** the reception container (5) is that container from which the flowable coating material is removed following completion.

## Revendications

1. Procédé de fabrication par lots d'un matériau de revêtement fluide, en particulier d'un vernis à l'eau ou contenant un solvant, à partir d'un grand nombre de composants, comprenant les étapes :
- introduction de composants nécessaires à un lot dans un récipient mélangeur industriel (3), pour l'essentiel en une quantité prédéfinie pour chaque lot,
- mélange des composants dans le récipient mélangeur industriel (3) pour obtenir un mélange ayant une composition provisoire,
- transfert d'au moins une partie du mélange ayant une composition provisoire du récipient mélangeur industriel (3) dans un récipient récepteur (5),
- établissement d'un état réel du mélange ayant une composition provisoire pendant le transfert dans le récipient récepteur (5),
- détermination d'un écart entre l'état réel du mélange ayant une composition provisoire et un état prescrit prédéfini,
- établissement d'une quantité d'ajustement, nécessaire pour atteindre l'état prescrit, pour les composants, et
- introduction complémentaire de la quantité d'ajustement des composants au mélange provisoire, pendant que le mélange provisoire est déjà transféré du récipient mélangeur industriel (3) dans le récipient récepteur (5), **caractérisé en ce que** le récipient récepteur (5) est le récipient à partir duquel, après la fabrication, le matériau de revêtement fluide est transvasé.

2. Procédé selon la revendication 1, dans lequel l'ensemble des composants du lot sont introduits dans le récipient mélangeur industriel.

3. Procédé selon la revendication 1, dans lequel une partie des composants, en particulier les composants qui sont importants pour la spécification du matériau de revêtement à fabriquer, est introduite dans le mélangeur industriel, et les autres composants destinés au lot sont introduits dans le récipient récepteur.

4. Procédé selon l'une des revendications précédentes, comprenant en outre les étapes :
- obtention du matériau de revêtement par homogénéisation continue du mélange provisoire, en même temps que de la quantité d'ajustement dans le récipient récepteur (5), et
- transvasement du matériau de revêtement à partir du récipient récepteur (5).

5. Procédé selon l'une des revendications précédentes, dans lequel l'étape de transfert du mélange ayant une composition provisoire commence après que le mélange provisoire a été mélangé pendant un temps prédéfini dans le récipient mélangeur industriel (3) .

6. Procédé selon l'une des revendications précédentes, dans lequel le mélange ayant une composition provisoire passe, pour le transfert dans le récipient récepteur, par un dispositif de mesure (23) disposé entre le récipient mélangeur industriel (3) et le récipient récepteur (5), dispositif de mesure dans lequel est établi l'état réel du mélange ayant une composition provisoire, à l'aide d'un ou plusieurs appareils de mesure.

7. Procédé selon l'une des revendications précédentes, dans lequel l'état réel est établi par mesure d'un ou plusieurs paramètres caractéristiques du mélange ayant une composition provisoire, et dans lequel l'état prescrit est établi par mesure d'un ou plusieurs paramètres caractéristiques du mélange ayant une composition provisoire, et l'état prescrit est défini au moyen de valeurs cibles prédéfinies des paramètres caractéristiques du mélange ayant une composition provisoire,
dans lequel les paramètres caractéristiques sont de préférence choisis dans la liste :
- viscosité,
- pH,
- couleur,
- masse volumique,
- transparence, et/ou
- granulométrie.

8. Procédé selon l'une des revendications précédentes, dans lequel l'établissement de l'état réel est effectué en continu pendant le transfert dans le récipient récepteur (5).

9. Procédé selon l'une des revendications précédentes, dans lequel l'introduction complémentaire des composants s'effectue par versement directement dans le récipient mélangeur industriel (3).

10. Procédé selon l'une des revendications précédentes, dans lequel l'introduction complémentaire des composants s'effectue par versement dans une conduite de fluide (7) entre le récipient mélangeur industriel (3) et le récipient récepteur (5), de préférence en amont du dispositif de mesure (23).

11. Procédé selon l'une des revendications 1 à 8, dans lequel l'introduction complémentaire des composants s'effectue par versement directement dans le récipient récepteur (5).

12. Procédé selon l'une des revendications précédentes, comprenant
- le nettoyage du récipient mélangeur industriel (3), et de préférence du dispositif de mesure, pour la préparation d'un lot suivant du même ou d'un autre matériau de revêtement fluide, dès que le mélange provisoire a été transféré dans le récipient récepteur (5) et avant la fin de l'homogénéisation dans le récipient récepteur (5).

13. Procédé selon l'une des revendications précédentes, comprenant :
- le regroupement de plusieurs lots homogènes constitués des composants et des quantités d'ajustement pour chaque lot dans le récipient récepteur (5),
- homogénéisation continue des lots dans le récipient récepteur (5), jusqu'à obtention d'une charge contenant un matériau de revêtement, et
- transvasement du matériau de revêtement de la charge à partir du récipient récepteur (5),
dans lequel de préférence le premier lot fabriqué dans le procédé selon l'une des revendications précédentes définit un mélange-maître, et aussi de préférence un ou plusieurs lots successifs définissent un lot clone, et sont fabriqués par un procédé dans lequel les quantités introduites en complément pour le mélange-maître d'un ou plusieurs composants à introduire en complément sont dosées dans le récipient mélangeur industriel déjà lors de l'introduction des composants destinés au lot clone correspondant.

14. Procédé selon l'une des revendications 6 à 13, comprenant :
- recyclage du matériau de revêtement fabriqué, ayant subi une homogénéisation finale, à l'aide d'une conduite de recyclage (37), du récipient récepteur (5) au dispositif de mesure (23), et nouveau transfert, en passant par le dispositif de mesure (23), dans le récipient récepteur (5), et détermination d'un état réel de la composition de revêtement pendant le transfert dans le récipient récepteur (5).

15. Installation de mélange (1) pour la fabrication par lots d'un matériau de revêtement fluide, en particulier d'un vernis à l'eau ou contenant un solvant, à partir d'un grand nombre de composants, comportant :
- un récipient mélangeur industriel (3), qui est agencé pour contenir des composants destinés à un lot, pour l'essentiel en une quantité prédéfinie pour chaque lot, et pour le mélange des composants dans le récipient mélangeur industriel (3), pour obtention d'un mélange ayant une composition provisoire,
- un récipient récepteur (5),
et qui présente une sortie pour le transvasement du matériau fluide après sa fabrication,
- une conduite de fluide (7), qui est reliée par liaison fluidique au récipient mélangeur industriel (3) et au récipient récepteur (5) pour le transfert du mélange ayant une composition provisoire du récipient mélangeur industriel (3) dans le récipient récepteur (5) ,
- un dispositif de mesure (23) affecté à la conduite de fluide (7), qui est agencé pour l'établissement d'un état réel du mélange ayant une composition provisoire pendant le transfert dans le récipient récepteur,
- une unité d'évaluation (25a), communiquant avec le dispositif de mesure (23), qui est agencée pour la détermination d'un écart entre l'état réel du mélange ayant une composition provisoire et un état prescrit prédéfini, et pour l'établissement d'une quantité d'ajustement, nécessaire pour atteindre l'état prescrit, pour les composants, et
- un dispositif doseur (12), qui est agencé pour, en fonction de la quantité d'ajustement nécessaire, introduire en complément les composants dans le mélange ayant une composition provisoire, pendant que le mélange ayant une composition provisoire est transféré déjà du récipient mélangeur industriel (3) dans le récipient récepteur (5),
**caractérisée en ce que** le récipient récepteur (5) est le récipient à partir duquel le matériau de revêtement fluide est transvasé après sa fabrication.
